# EUROPEAN PATENT APPLICATION

(11) **EP 4 653 255 A1**
(43) Date of publication of application: **26.11.2025**
(21) Application number: 24902179.1
(22) Date of filing: 20.08.2024
(51) Int. Cl.: B60P 1/00, B65D 88/54, B65D 90/66, B65D 90/54, B60P 1/16, B62D 33/04

(54) **UNLOADING METHOD FOR SYNTHETIC RESIN CONTAINER**

(30) Priority: 15.12.2023 CN 202311738032
(71) Applicant: CRRC Qiqihar Rolling Stock Co., Ltd., Qiqihar, Heilongjiang 161002 (CN); PetroChina Company Limited, Beijing 100011 (CN)
(72) Inventor: CHEN, Lanzhong, Qiqihar, Heilongjiang 161002 (CN); GONG, Wenxin, Qiqihar, Heilongjiang 161002 (CN); YANG, Tiankui, Qiqihar, Heilongjiang 161002 (CN); CAO, Bingwu, Qiqihar, Heilongjiang 161002 (CN); CHEN, Lei, Qiqihar, Heilongjiang 161002 (CN); YANG, Xuebai, Qiqihar, Heilongjiang 161002 (CN); ZHU, Wanhai, Qiqihar, Heilongjiang 161002 (CN); LI, Hua, Qiqihar, Heilongjiang 161002 (CN); LIU, Haipeng, Qiqihar, Heilongjiang 161002 (CN); YUE, Linghan, Qiqihar, Heilongjiang 161002 (CN); LI, Tao, Qiqihar, Heilongjiang 161002 (CN); HOU, Tianhua, Qiqihar, Heilongjiang 161002 (CN); YANG, Qipeng, Qiqihar, Heilongjiang 161002 (CN); YIN, Jing, Qiqihar, Heilongjiang 161002 (CN); LI, Cui, Qiqihar, Heilongjiang 161002 (CN); LI, Linjie, Qiqihar, Heilongjiang 161002 (CN); ZHANG, Junfeng, Qiqihar, Heilongjiang 161002 (CN); SAN, Junmin, Qiqihar, Heilongjiang 161002 (CN); LI, Zhongbo, Qiqihar, Heilongjiang 161002 (CN)
(74) Representative: Zermani Biondi Orsi, Umberto
(86) International application number: PCT/CN2024/113466
(87) International publication number: WO 2025/123753

(57) **Abstract**

The present application provides an unloading method for a synthetic resin container, including: maintaining a synthetic resin container at a vertical position, opening an unloading door on a side wall of the synthetic resin container, and when a detection signal of a pressure sensor arranged at a bottom of the synthetic resin container satisfies a preset condition, controlling the synthetic resin container to start to tilt with a long side of a bottom wall as an axis; controlling the synthetic resin container to gradually tilt from the vertical position to a tilted position within a first preset duration; and after the synthetic resin container reaches the tilted position, controlling the synthetic resin container to move from the tilted position to the vertical position within a second preset duration. The technical solution of the present application effectively solves the problem of low unloading efficiency of the synthetic resin container in the related art.

## Description

### Cross-Reference to Related Application

The present application claims the priority of Chinese Patent Application No. CN 202311738032.7, filed to the China National Intellectual Property Administration on December 15, 2023 and entitled "Unloading Method for Synthetic Resin Container", the application of which is incorporated herein by reference in its entirety.

### Technical Field

The present application relates to the technical field of unloading from a synthetic resin container, and in particular, to an unloading method for a synthetic resin container.

### Background

With the promotion and implementation of bulk-to-container transport, bulk granular goods such as grain and chemical raw materials are gradually stored, transported, and loaded/unloaded by means of synthetic resin containers. During unloading, a hydraulic lifting mechanism is mainly used to rotate the synthetic resin container, for unloading. The bulk granular goods flow out depending on their own weight.

In the related art, in an unloading operation, the extension length of a hydraulic cylinder is controlled by manually observing an angle indicator mounted at one end of the synthetic resin container, thereby controlling the rotating angle of the synthetic resin container; and this results in a low unloading efficiency, and as this method relies on manual experience for judgment, the unloading time varies significantly.

### Summary

A main object of the present application is to provide an unloading method for a synthetic resin container, so as to solve the problem of low unloading efficiency of the synthetic resin container in the related art.

In order to achieve the described object, the present application provides an unloading method for a synthetic resin container, including: a synthetic resin container is maintained at a vertical position, an unloading door on a side wall of the synthetic resin container is opened, and when a detection signal of a pressure sensor arranged at a bottom of the synthetic resin container satisfies a preset condition, the synthetic resin container is controlled to start to tilt with a long side of a bottom wall as an axis; the synthetic resin container is controlled to gradually tilt from the vertical position to a tilted position within a first preset duration; and after the synthetic resin container reaches the tilted position, the synthetic resin container is controlled to move from the tilted position to the vertical position within a second preset duration.

Further, a step that when the detection signal of the pressure sensor arranged at the bottom of the synthetic resin container satisfies the preset condition, the synthetic resin container is controlled to start to tilt with the long side of the bottom wall as an axis, includes: the detection signal detected by the pressure sensor is transmitted to a controller, wherein the detection signal corresponds to a real-time weight of the synthetic resin container; and when a ratio of the real-time weight of the synthetic resin container to a total weight of the synthetic resin container satisfies a preset ratio, the controller controls a lifting mechanism to work such that the synthetic resin container starts to tilt with the long side of the bottom wall as the axis; wherein the preset ratio ranges from 0.65 to 0.75.

Further, when the detection signal of the pressure sensor arranged at the bottom of the synthetic resin container does not satisfy the preset condition, and a duration for which the synthetic resin container is maintained at the vertical position reaches a third preset duration, the synthetic resin container is controlled to start to tilt with the long side of the bottom wall as an axis.

Further, the second preset duration is shorter than the first preset duration, and the first preset duration is longer than the third preset duration.

Further, a ratio of a sum of the first preset duration and the second preset duration to the third preset duration ranges from 1.5 to 3.

Further, a sum of the first preset duration and the second preset duration ranges from 30 min to 50 min.

Further, a step that the synthetic resin container is controlled to gradually tilt from the vertical position to the tilted position within the first preset duration, includes: when a ratio of a real-time weight of the synthetic resin container to a total weight of the synthetic resin container is greater than 0.55, the synthetic resin container tilts at a first speed; when the ratio of the real-time weight of the synthetic resin container to the total weight of the synthetic resin container is greater than or equal to 0.3 and less than or equal to 0.55, the synthetic resin container rotates at a second speed; and when the ratio of the real-time weight of the synthetic resin container to the total weight of the synthetic resin container is less than 0.3, the synthetic resin container rotates at a third speed, wherein the first speed is less than the second speed, and the third speed is less than the second speed.

Further, the first speed is greater than the third speed.

Further, the first speed, the second speed, and the third speed all range from 0.75°/min to 1.25°/min.

Further, when the synthetic resin container is at the tilted position, an angle between a bottom surface of the synthetic resin container and a horizontal plane ranges from 30° to 50°.

By applying the technical solution of the present application, the synthetic resin container is maintained at a vertical position and an unloading door on the synthetic resin container is opened. When a detection signal of a pressure sensor arranged at the bottom of the synthetic resin container satisfies a preset condition, the synthetic resin container is controlled to start to tilt with a long side of a bottom wall as an axis. The synthetic resin container is controlled to gradually tilt from the vertical position to a tilted position within a first preset duration. After the synthetic resin container reaches the tilted position, the synthetic resin container is controlled to move from the tilted position to the vertical position within a second preset duration. With the arrangement above, when unloading is performed, the unloading door is opened first such that the synthetic resin container first performs unloading at the vertical position. As goods are fully loaded in the synthetic resin container, the flowing speed of the goods at the vertical position is higher. When the preset condition is satisfied, the synthetic resin container is controlled to start to tilt, and since some goods have been unloaded at the vertical position, at this time, the weight of the synthetic resin container is reduced, such that the synthetic resin container is more easily tilted. During the gradual tilting of the synthetic resin container, the goods flow out of the unloading door continuously, and the flowing speed is high. After reaching the tilted position, the synthetic resin container moves from the tilted position to the vertical position within the second preset duration. In the described process, the goods remaining in the synthetic resin container can be unloaded gradually, such that the goods in the synthetic resin container can be completely unloaded, and the unloading efficiency is high. Therefore, the technical solution of the present application effectively solves the problem of low unloading efficiency of the synthetic resin container in the related art.

### Brief Description of the Drawings

The drawings of the description, constituting a part of the present application, are used for providing further understanding of the present application, and the illustrative embodiments of the present application and illustrations thereof are used for explaining the present application, rather than constitute inappropriate limitation on the present application. In the drawings:
Fig. 1 shows a schematic diagram of a flowchart of an embodiment of an unloading method for a synthetic resin container according to the present application;
Fig. 2 shows a schematic diagram of a specific flowchart of step S10 of the unloading method for a synthetic resin container of Fig. 1;
Fig. 3 is a schematic diagram of a perspective structure of a synthetic resin container in the unloading method for a synthetic resin container of Fig. 1; and
Fig. 4 shows a schematic diagram of a function relationship of the unloading method for a synthetic resin container of Fig. 1.

The figures above include the following reference signs:
1: Synthetic resin container; 2: Unloading door.

### Detailed Description of the Embodiments

Hereinafter, the technical solutions in embodiments of the present application will be described clearly and completely with reference to the accompanying drawings of the embodiments of the present application. Obviously, the embodiments as described are only some of the embodiments of the present application, and are not all of the embodiments of the present application. The following description of at least one exemplary embodiment is merely illustrative in nature, and is in no way intended to limit the present application and any applications or uses thereof. All other embodiments obtained by a person of ordinary skill in the art on the basis of the embodiments of the present application without involving any inventive effort shall all fall within the scope of protection of the present application.

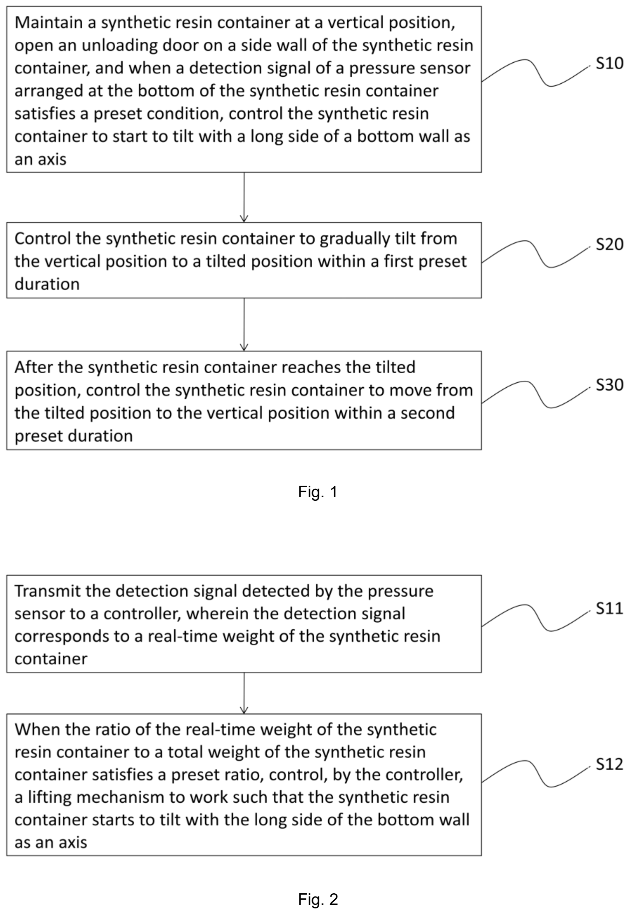

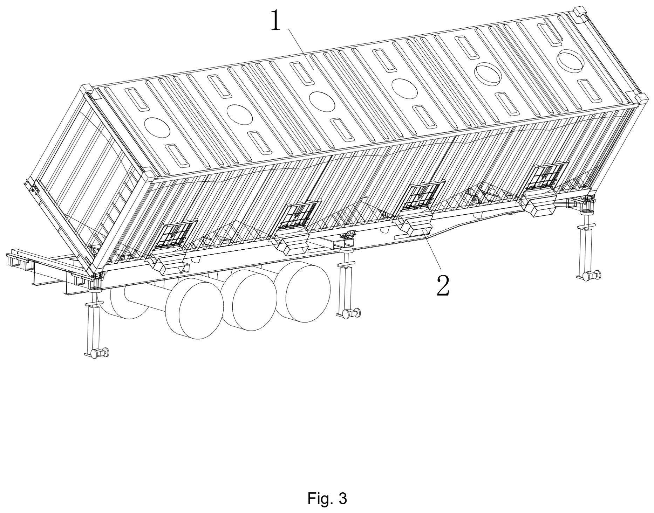

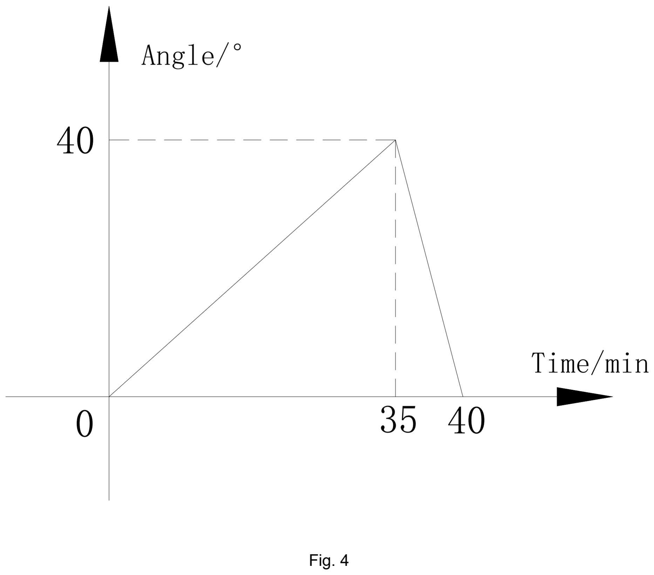

As shown in Fig. 1 to Fig. 4, in this embodiment, an unloading method for a synthetic resin container 1 includes:
step S10: the synthetic resin container 1 is maintained at a vertical position, an unloading door 2 on a side wall of the synthetic resin container 1 is opened, and when a detection signal of a pressure sensor arranged at the bottom of the synthetic resin container 1 satisfies a preset condition, the synthetic resin container 1 is controlled to start to tilt with a long side of a bottom wall as an axis;
step S20: the synthetic resin container 1 is controlled to gradually tilt from the vertical position to a tilted position within a first preset duration; and
step S30: after the synthetic resin container 1 reaches the tilted position, the synthetic resin container 1 is controlled to move from the tilted position to the vertical position within a second preset duration.

By applying the technical solution of the present embodiment, the synthetic resin container 1 is maintained at a vertical position and an unloading door 2 on the synthetic resin container 1 is opened. When a detection signal of a pressure sensor arranged at the bottom of the synthetic resin container 1 satisfies a preset condition, the synthetic resin container 1 is controlled to start to tilt with a long side of a bottom wall as an axis. The synthetic resin container 1 is controlled to gradually tilt from the vertical position to a tilted position within a first preset duration. After the synthetic resin container 1 reaches the tilted position, the synthetic resin container 1 is controlled to move from the tilted position to the vertical position within a second preset duration. With the arrangement above, when unloading is performed, the unloading door 2 is opened first such that the synthetic resin container 1 first performs unloading at the vertical position. As goods are fully loaded in the synthetic resin container 1, the flowing speed of the goods at the vertical position is higher. When the preset condition is satisfied, the synthetic resin container 1 is controlled to start to tilt, and since some goods have been unloaded at the vertical position, at this time, the weight of the synthetic resin container 1 is reduced, such that the synthetic resin container 1 is more easily tilted. During the gradual tilting of the synthetic resin container 1, the goods flow out of the unloading door 2 continuously, and the flowing speed is high. After reaching the tilted position, the synthetic resin container moves from the tilted position to the vertical position within the second preset duration. In the described process, the goods remaining in the synthetic resin container 1 can be unloaded gradually, such that the goods in the synthetic resin container 1 can be completely unloaded, and the unloading efficiency is high. Therefore, the technical solution of the present embodiment effectively solves the problem of low unloading efficiency of the synthetic resin container 1 in the related art.

Specifically, in this embodiment, the second preset duration is 5 minutes.

It should be noted that: the step that after the synthetic resin container 1 reaches the tilted position, the synthetic resin container 1 is controlled to move from the tilted position to the vertical position within the second preset time duration, includes two cases: in the first case, after the synthetic resin container 1 reaches the tilted position and remains there for a certain period of time, the synthetic resin container 1 is controlled to move from the tilted position to the vertical position within the second preset duration; and in the second case, after the synthetic resin container 1 reaches the tilted position and does not remains there, the synthetic resin container 1 is directly controlled to move from the tilted position to the vertical position within the second preset duration.

Step S10: when the detection signal of the pressure sensor arranged at the bottom of the synthetic resin container 1 satisfies the preset condition, the synthetic resin container 1 is controlled to start to tilt with the long side of the bottom wall as an axis, includes:
step S11: the detection signal detected by the pressure sensor is transmitted to a controller, wherein the detection signal corresponds to a real-time weight of the synthetic resin container 1; and
step S12: when the ratio of the real-time weight of the synthetic resin container 1 to a total weight of the synthetic resin container 1 satisfies a preset ratio, the controller controls a lifting mechanism to work such that the synthetic resin container 1 starts to tilt with the long side of the bottom wall as an axis; wherein the preset ratio ranges from 0.65 to 0.75. By the arrangement above, when the synthetic resin container 1 is at the vertical position, some goods have been unloaded, at this time, the weight of the synthetic resin container 1 is reduced, and the lifting of the synthetic resin container 1 is easier. Furthermore, when the preset ratio of the synthetic resin container 1 ranges from 0.75 to 0.65, when the synthetic resin container 1 is at the vertical position, an unloading speed of goods from the synthetic resin container will be reduced, and at this time, the synthetic resin container 1 is gradually tilted, which can improve the unloading speed of goods, thereby making the unloading efficiency high.

It should be noted that the total weight of the synthetic resin container 1 and the goods is based on data measured by the pressure sensor when the unloading door 2 is not opened. Certainly, the total weight of the synthetic resin container 1 and the goods may also be set to a preset value.

When the detection signal of the pressure sensor arranged at the bottom of the synthetic resin container 1 does not satisfy the preset condition, and the duration for which the synthetic resin container 1 is maintained at the vertical position reaches a third preset duration, the synthetic resin container 1 is controlled to start to tilt with the long side of the bottom wall as an axis. The described arrangement can prevent inaccurate detection signal of the pressure sensor, and even if the pressure sensor cannot be used normally, the synthetic resin container 1 can also start rotating when reaching the third preset duration, thereby ensuring accurate and efficient unloading.

The second preset duration is shorter than the first preset duration, and the first preset duration is longer than the third preset duration. The arrangement above can ensure the unloading efficiency.

The ratio of a sum of the first preset duration and the second preset duration to the third preset duration ranges from 1.5 to 3, and a sum of the first preset duration and the second preset duration ranges from 30 min to 50 min. The arrangement above can make the total unloading time short.

The step that the synthetic resin container 1 is controlled to gradually tilt from the vertical position to the tilted position within the first preset duration, includes: when the ratio of the real-time weight of the synthetic resin container 1 to the total weight of the synthetic resin container 1 is greater than 0.55, the synthetic resin container 1 tilts at a first speed; when the ratio of the real-time weight of the synthetic resin container 1 to the total weight of the synthetic resin container 1 is greater than or equal to 0.3 and less than or equal to 0.55, the synthetic resin container 1 rotates at a second speed; and when the ratio of the real-time weight of the synthetic resin container 1 to the total weight of the synthetic resin container 1 is less than 0.3, the synthetic resin container 1 rotates at a third speed, wherein the first speed is less than the second speed, and the third speed is less than the second speed. The first speed is greater than the third speed. The arrangement above can further improve the unloading speed. Specifically, by the described operation, the first speed is relatively slow; and in such an arrangement, when the synthetic resin container 1 starts to tilt, the weight of the synthetic resin container 1 is relatively large, thus tilting at a slower speed can reduce the lifting/lowering difficulty, and can reduce an inertia of the synthetic resin container 1 during tilting, such that the movement of the synthetic resin container 1 can be more stable. When tilting at the second speed, goods in the synthetic resin container 1 are reduced at this time, and increasing the speed does not generate large inertia; and such an arrangement can increase the unloading speed, and finally, when moving at the third speed, goods in the synthetic resin container can be completely unloaded.

The first speed, the second speed, and the third speed all range from 0.75°/min to 1.25°/min. The first speed, the second speed, and the third speed are angular speeds. Preferably, the first speed is 0.9°/min, the second speed is 1.1 °/min, and the third speed is 0.8°/min.

When the synthetic resin container 1 is at the tilted position, an angle between a bottom surface of the synthetic resin container 1 and a horizontal plane ranges from 30° to 50°. The angle can ensure that goods in the synthetic resin container 1 are completely unloaded.

Specifically, when unloading in the vertical state, depending on a tilt angle formed by a ridge in the synthetic resin container 1 and an adapter, the goods flow out through the unloading door due to gravity. When unloading in the vertical state, one third of the goods needs to be unloaded. According to requirements and the process cycle requirements of an unloading system, the total unloading time T is less than or equal to 1 hour. T=T1+T2;
T1 - vertical unloading time (T1≤20 min); and
T2 - tilting unloading time (T2≤40 min).

When the technical solution of this embodiment is used for unloading, the specific flow is as follows:
1. a fully-loaded container reaches a designated unloading position;
2. connect a safety chain;
3. connect a pneumatic pipeline;
4. connect a hydraulic pipeline;
5. open an outer door and connect an adapter;
6. open an inner door to allow goods flow out naturally;
7. start a hydraulic control system program, and the hydraulic control system automatically completes an unloading flow; and
8. close a container door, and disconnect a pneumatic and hydraulic system.

By the operations above, the unloading efficiency can be effectively increased, and the manual operation can be reduced.

The technical solution of the present embodiment is a solution proposed directed to the disadvantages of complicated unloading operation and low unloading efficiency, etc. during running of existing hydraulic control. A PLC automatically controls a hydraulic system to complete automatic unloading, thereby increasing the unloading efficiency while reducing manual operations, being safer and more reliable.

The content above merely relates to preferred embodiments of the present application, and is not intended to limit the present application. For a person skilled in the art, the present application may have various modifications and changes. Any modifications, equivalent replacements, improvements and the like made within the spirit and principle of the present application shall all fall within the scope of protection of the present application.

## Claims

1. An unloading method for a synthetic resin container, comprising:
maintaining a synthetic resin container (1) at a vertical position, opening an unloading door (2) on a side wall of the synthetic resin container (1), and when a detection signal of a pressure sensor arranged at a bottom of the synthetic resin container (1) satisfies a preset condition, controlling the synthetic resin container (1) to start to tilt with a long side of a bottom wall as an axis;
controlling the synthetic resin container (1) to gradually tilt from the vertical position to a tilted position within a first preset duration; and
after the synthetic resin container (1) reaches the tilted position, controlling the synthetic resin container (1) to move from the tilted position to the vertical position within a second preset duration.

2. The unloading method for a synthetic resin container according to claim 1, wherein a step of when the detection signal of the pressure sensor arranged at the bottom of the synthetic resin container (1) satisfies the preset condition, controlling the synthetic resin container (1) to start to tilt with the long side of the bottom wall as an axis, comprises:
transmitting the detection signal detected by the pressure sensor to a controller, wherein the detection signal corresponds to a real-time weight of the synthetic resin container (1); and
when a ratio of the real-time weight of the synthetic resin container (1) to a total weight of the synthetic resin container (1) satisfies a preset ratio, controlling, by the controller, a lifting mechanism to work such that the synthetic resin container (1) starts to tilt with the long side of the bottom wall as the axis;
wherein the preset ratio ranges from 0.65 to 0.75.

3. The unloading method for a synthetic resin container according to claim 1, wherein when the detection signal of the pressure sensor arranged at the bottom of the synthetic resin container (1) does not satisfy the preset condition, and a duration for which the synthetic resin container (1) is maintained at the vertical position reaches a third preset duration, the synthetic resin container (1) is controlled to start to tilt with the long side of the bottom wall as an axis.

4. The unloading method for a synthetic resin container according to claim 3, wherein the second preset duration is shorter than the first preset duration, and the first preset duration is longer than the third preset duration.

5. The unloading method for a synthetic resin container according to claim 4, wherein a ratio of a sum of the first preset duration and the second preset duration to the third preset duration ranges from 1.5 to 3.

6. The unloading method for a synthetic resin container according to claim 4, wherein a sum of the first preset duration and the second preset duration ranges from 30 min to 50 min.

7. The unloading method for a synthetic resin container according to claim 1, wherein a step of controlling the synthetic resin container (1) to gradually tilt from the vertical position to the tilted position within the first preset duration, comprises:
when a ratio of a real-time weight of the synthetic resin container (1) to a total weight of the synthetic resin container (1) is greater than 0.55, the synthetic resin container (1) tilting at a first speed; when the ratio of the real-time weight of the synthetic resin container (1) to the total weight of the synthetic resin container (1) is greater than or equal to 0.3 and less than or equal to 0.55, the synthetic resin container (1) rotating at a second speed; and when the ratio of the real-time weight of the synthetic resin container (1) to the total weight of the synthetic resin container (1) is less than 0.3, the synthetic resin container (1) rotating at a third speed, wherein the first speed is less than the second speed, and the third speed is less than the second speed.

8. The unloading method for a synthetic resin container according to claim 7, wherein the first speed is greater than the third speed.

9. The unloading method for a synthetic resin container according to claim 8, wherein the first speed, the second speed, and the third speed all range from 0.75°/min to 1.25°/min.

10. The unloading method for a synthetic resin container according to any one of claims 1-9, wherein when the synthetic resin container (1) is at the tilted position, an angle between a bottom surface of the synthetic resin container (1) and a horizontal plane ranges from 30° to 50°.
